Europäisches Patentamt

**European Patent Office**

**Office européen des brevets**

(11) Publication number: **0 383 564**
**A2**

# EUROPEAN PATENT APPLICATION

(21) Application number: **90301553.5**

(51) Int. Cl.5: **B01L 3/14, B67B 7/02**

(22) Date of filing: **14.02.90**

(30) Priority: **14.02.89 US 310159**

(43) Date of publication of application:
**22.08.90 Bulletin 90/34**

(84) Designated Contracting States:
**BE CH DE FR GB IT LI LU NL**

(71) Applicant: **EASTMAN KODAK COMPANY**
**343 State Street**
**Rochester, New York 14650(US)**

(72) Inventor: **Muszak, Martin Frank, c/o Eastman**
**Kodak Company**
**Patent Department, 343 State Street,**
**Rochester**
**New York 14650(US)**

(74) Representative: **Phillips, Margaret Dawn et al**
**Kodak Limited Patent Department Headstone**
**Drive**
**Harrow, Middlesex HA1 4TY(GB)**

(54) **Stopper remover apparatus.**

(57) There have been several attempts to provide automatic stopper removing apparatus for automatically removing stoppers from otherwise closed containers. One such attempt has resulted in the necessity of connecting the stopper to its associated container to prevent it being lost. Alternatively, piercing devices have been proposed which severely pierce the stopper. Such devices cannot be used with stoppers made of relatively tough materials, and often have to be forcibly removed from the stopper. Described herein is a stopper remover (40) for automatically removing a stopper (10) in a container (14). The remover (40) comprises container gripping means (30, 32, 34) for gripping the container and stopper gripping means (40) for gripping the stopper (10). The stopper gripping means (40) is rotated about an axis by a motor (44) while it grips the stopper (10). The remover features an annular ring (64) having a plurality of spikes (70) terminating in points (72) extending from its inner surface (66), the spikes (70) being generally disposed on the ring (64) so as to be non-radially aligned. The result is that the spikes (70) positively grip the stopper (10) only when rotated in the one direction, and slip off the stopper (10) when rotated in an opposite direction.

FIG. I

## STOPPER REMOVER APPARATUS

This invention relates to apparatus for automatically removing stoppers from containers of liquid, and is more particularly, although not exclusively, concerned with containers which are used in analyzers.

Automated means have been attempted for years to remove stoppers from test tubes or containers. Early approaches have been to "flip" out the stopper by leveraging one edge, as described, for example in US Patent Specification USA-4217798 and German Auslegungschrift DE-A-3141780. Such an approach creates the hazard of loose stoppers, or necessitates the use of a connector to secure unstoppered stoppers to their associated containers. To deal with this, more positive gripping means have been provided, for example devices using spikes that pierce the top of the stopper before pulling out the stopper, as described in published European patent application EP-A-0264456. However, such piercing devices severly penetrate the stopper, and are not likely to be useful on stoppers or plugs made from relatively tough materials, e.g. plastic materials. Furthermore, the severe penetration of the stopper means that only a forceful withdrawal of the spikes will remove them from engagement with the stopper, as is necessary when restoppering the container. Such a forceful withdrawal requires pusher means of some kind, so that a simple reversal of part positions, e.g. the pulling apart of jaws on which the spikes are mounted, is apt to still leave the stopper impaled on one or more of the spikes.

Thus, there has been a problem, prior to this invention, in providing an automatic stopper remover which positively engages the stopper to be removed, and avoids having loose stoppers, while at the same time provides for ready withdrawal of engagement of the stopper, such as by reversing the action of the stopper gripping means.

It is therefore an object of the present invnetion to provide automated stopper remover apparatus which solves the problems discussed above.

In accordance with the present invention, there is provided stopper remover apparatus for automatically removing a stopper in a open end of an otherwise closed container, the apparatus comprising container gripping means for gripping the container and preventing rotation thereof, stopper gripping means for gripping the stopper, and drive means for rotating the stopper gripping means about an axis while the stopper is being gripped;

characterized in that the stopper gripping means includes engaging means for frictionally engaging the stopper while the drive means rotates in one direction, the engaging means disengaging the stopper when the drive means rotates in an opposite direction.

Advantageously, the engaging means comprises a plurality of spikes terminating in ends which are disposed generally to form an annular surface which engage the stopper, each spike being mounted so as to be non-radially aligned.

It is an advantageous feature of the invention that a stopper remover is provided which will slightly penetrate and positively grip a stopper for retention, but only when rotated in one direction.

It is a related advantageous feature of the invention that such a stopper remover is provided which penetrates only the surface portion of the stopper, so as to be readily disengaged from the stopper by reversing the direction of rotation.

Another advantageous feature of the invention is the provision of a stopper remover which, by virtue of its surface penetrability of the stopper, acts only on stopper materials and not inadvertently on the glass container surrounding such a stopper.

For a better understanding of the present invention, reference will now be made, by way of example only, to the accompanying drawings in which:-

Figure 1 is a fragmentary elevational view in section of a stopper remover constructed in accordance with the invention;

Figure 2 is a fragmentary sectional view taken generally along the line II-II of Figure 1;

Figure 3 is a partially diagrammatic elevational view taken generally along the line III-III of Figure 2, to show a preferred packing density of the spikes; and

Figure 4 is a fragmentary, partially schematic, elevational view illustrating the manner in which the stopper remover can be mounted in an analyzer.

A preferred embodiment of stopper removing apparatus which is particularly useful in an analyzer which analyzes for analytes in patient samples such as blood, will now be described. In such analyzers, it is particularly useful to have stopper remover apparatus at the front end of the analyzer, where test tube containers with positive patient identification are placed into the analyzer in a stoppered condition.

In addition, the invention is useful for the removal of the stopper of any container, where the stopper can be penetrated, at least at its surface, by spikes. Stopper removing apparatus according to the present invention can be used in any situation, regardless of the contents of the containers or subsequent processing of the contents.

The term "spikes", as used in this specification, refers to a plurality of generally straight and stiff members, each having a generally cylindrical shape, and of a length which is several times greater than the diameter of the cylinder. Wires are particularly useful examples of "spikes", and will be described in greater detail hereinafter.

Any stopper remover has the following principal objects in its operation:-

a) to hold the stopper,

b) to hold the liquid container into which the stopper is inserted, and

c) to provide relative movement between the stopper and the container to remove the stopper from the container.

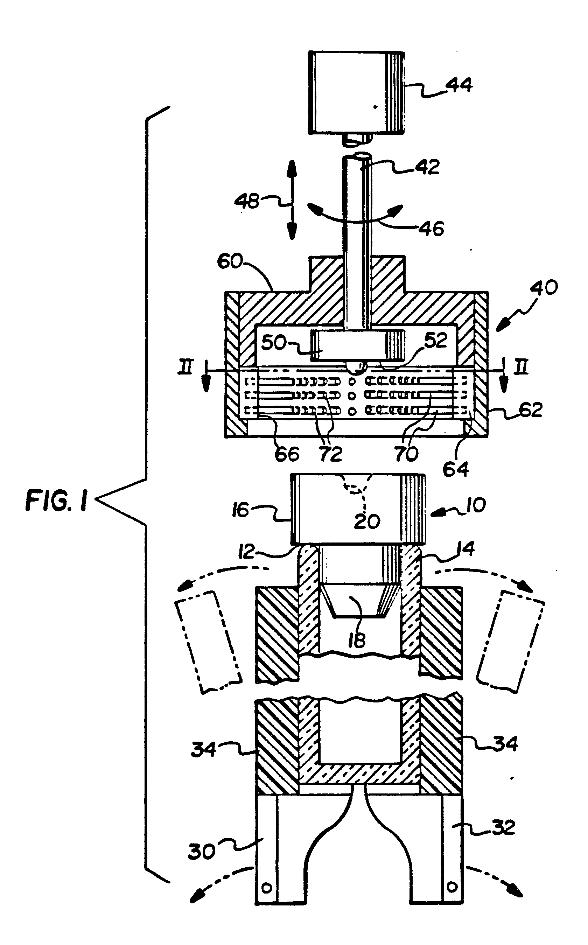

In Figure 1, a stopper 10 is inserted into an open end 12 of a liquid container 14 which is basically a test tube. However, any kind of container can be used, provided it utilizes a stopper that can be gripped by the stopper remover of the invention. The stopper 10 has an outer top portion 16, and a narrower neck portion 18. A central depression 20 is formed in top portion 16. Although a particular embodiment of stopper 10 is described, any suitable shape can be used provided it can be properly gripped.

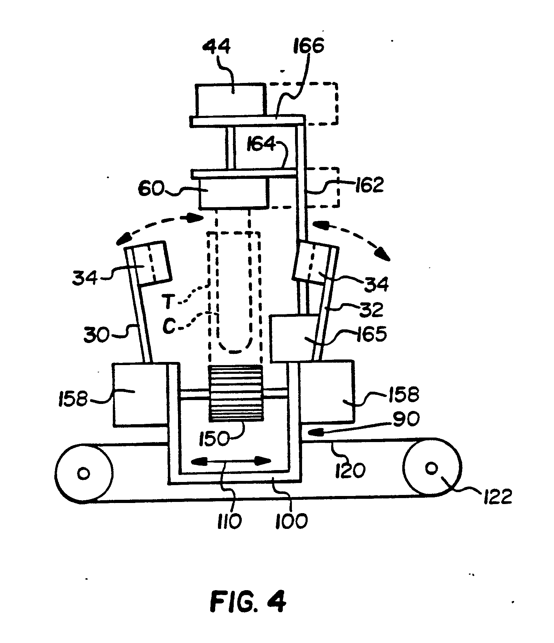

To remove the stopper 10, relative movement between the stopper 10 and the container 14 must be provided. In order to achieve that, it is usual to grip the container 14 to hold it stationary. Any conventional means is useful for this purpose. In the described embodiment, it is preferred that means which can releasably engage the container 14 are used. In this case, a pair of jaws 30, 32 are provided as shown in Figures 1 and 4. These jaws 30, 32 are pivotably mounted at one end to move into and out of engagement with the container 14. Elastomeric grippers 34 are provided on the jaws 30, 32 for contacting and holding the container 14 by friction. However, the force exerted by the jaws 30, 32 is not sufficient to break the container 14 if made out of glass. The released position of the jaws 30, 32 is shown in phantom in Figure 1.

A gripper device 40 is provided to grip the stopper 10 during its removal from the container 14. The device 40 preferably grips the stopper 10 along the outer surface thereof. The device 40 is mounted on a drive shaft 42 which is connected to a conventional motor 44. The motor 44 provides both rotary and linear motion (as shown by arrows 46 and 48 respectively) so that the stopper 10, when gripped by the device 40, is caused to move relative to container 14.

An optional feature provided in the gripper device 40 is a plunger 50 mounted on the end of shaft 42 which is opposite to the end connected to motor 44. Surface 52 of plunger 50 preferably is configured to match the contour of the top surface of stopper 10, including depression 20. Alternatively, however, plunger 50 can be omitted since gripping of the device 40 is the major means by which the stopper is gripped, and will now be described in detail.

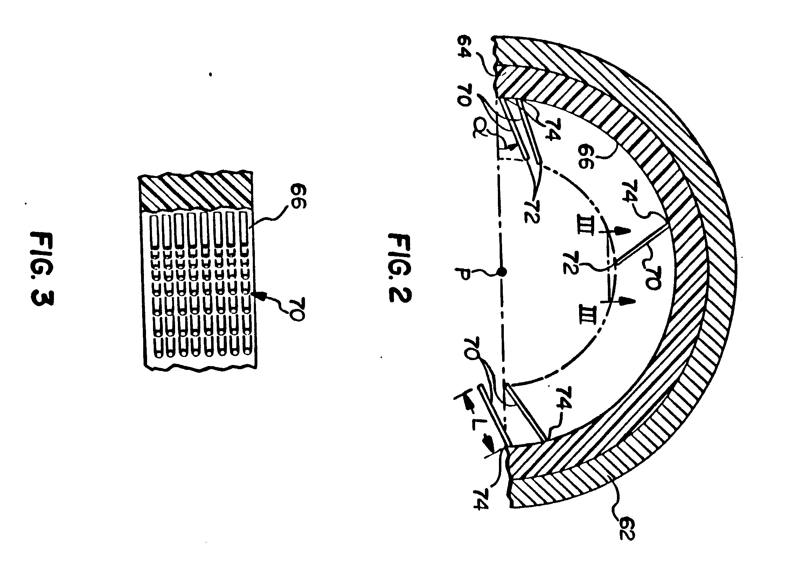

The device 40 includes a housing 60 which has a general cup shape with an annular lip 62, and an annular ring 64 having an inner surface 66 is positioned inside lip 62. Emanating inwardly from surface 66 is a plurality of spikes 70 terminating in points at ends 72 which are generally disposed to create an annular surface which is generally parallel to and generally coincident with surface 66 (as shown in Figures 1 and 2). Ends 74 of spikes 70 opposite to ends 72, as shown in Figure 2, are embedded within the annular ring 64 so that each spike 70 extends from surface 66 of the annular ring 64 at a non-zero angle $\alpha$, to a diameter drawn through the center point P of ring 64. Angle $\alpha$ can be between about $30°$ and about $60°$, and is preferably about $45°$. Below $30°$, there is too little differential between engaging in one rotational direction and not engaging in the other. Above $60°$, the engagement during clockwise rotation also tends to start to decrease as the spikes become too tangentially aligned relative to the outer surface of the stopper 10. Angle $\alpha$ is preferably generally the same for each spike, and with the same sign (counterclockwise as shown), around the circumference of surface 66. It is because of the same sign of $\alpha$, that the spikes are said to be "similarly non-radially aligned".

The purpose of such mounting of spikes 70 is to ensure that, when upper portion 16, having an outer diameter equal to or slightly larger than the diameter of the surface formed by ends 72, is inserted into the space between ends 72, those ends penetrate slightly into the surface of the stopper 10 so as to engage the stopper 10, when ring 64 and its spikes are turned clockwise relative to point P (assumed to be stationary). However, if ring 64 is rotated the opposite direction (counterclockwise), ends 72 release from the surface of the stopper 10 due to the wiping action induced by angle $\alpha$, and spikes 70 release their grip on the stopper 10.

A variety of packing densities is useful for the spikes 70, one such packing density being depicted in Figure 3. Preferably, the packing density is from 10 to about 25 spikes per cm$^2$ of curved surface, and most preferably about 15 per cm$^2$. These densities are selected because, below this lower value of about 10, the spikes tend to act more like individual nails and penetrate the surface of the stopper too much, making release more difficult. The upper limit is not as significant, and is present only by way of economy since the additional cost of more spikes is not warranted.

As noted, wires are particularly useful examples, wherein length L, as shown in Figure 2, is about 0.80cm, and the diameter of the wire is about 0.025cm. In addition, the lengths can be varied $\pm 0.1$cm provided the diameter of the surface formed by ends 72 is adjusted to meet that provided by the outside diameter of the stopper 10 to be engaged.

Any material can be used for such spikes, so long as they are relatively stiff and yet flexible enough to allow some bending when rotated into engagement, and flexing back to straight when rotated out of engagement. To this end, metal wires having a modulus of elasticity of about 210GPa ($30 \times 10^6$psi), are particularly preferred.

Such construction of the spikes 70 allows proper engagement of stoppers made of rubber, cork, or even plastic having a hardness below about Rockwell hardness L60 (as determined by American Standards measurement ASTM D785). It is a significant feature of these spikes that they will NOT engage the container 14, if the latter is made of glass or materials of similar hardness, as is customary. In particular, spikes 70 are not capable of surface penetration of glass, nor will they significantly frictionally engage the same, even when ring 69 is rotated clockwise, as shown in Figure 2. As a result, if the device 40 is inadvertently applied too far down on a container 14 so as to miss the stopper and grip the container itself, or if the stopper is missing, the spikes will not be able to grip the container sufficiently to apply significant torque thereto. This is in contrast to materials such as elastomers shaped with fingers aligned at angle $\alpha$, which engage by friction alone. Such fingers will significantly frictionally engage glass as well as penetrable surfaces, thereby inducing enough torque against the container which otherwise gripped in place (by jaws 30, 32) as to break the container.

Turning now to Figure 4, the stopper remover comprising jaws 30, 32 and gripper means 40 can be mounted at any suitable location, and preferably at a location 90 adjacent the loading end of an analyzer. As shown, it is mounted on a frame 100 that slides back and forth, as shown by arrow 110, on a rail (not shown), as induced by the translational back and forth movement of a belt 120 which is driven by pulley 122. Frame 100 in turn carries an endless conveyor belt 150, with jaws 30 and 32 being operated by motors 158 also mounted on frame 100. A vertically extending shaft 162 is connected to a rotating motor 165, and supports two platforms 164 and 166. Platform 164 can be used to support housing 60 in a bearing journal (not shown), while platform 166 supports motor 44. Motor 165 serves only to slightly rotate housing 60 and motor 44 out of the way of other parts, to a location shown in phantom, after a stopper has been removed.

Containers C, whether stoppered or unstoppered by the action of the stopper remover, preferably are carried by trays, schematically shown as "T", on belt 150. Jaws 30 and 32 and their gripping members 34 are constructed to slip through apertures (not shown) in the trays to contact containers C.

Frame 100 is rendered translatable, in the direction of arrow 110, so that the frame and belt 150 can be aligned with alternate locations to take trays from more than one loading track. After the stopper is removed from any particular container, the liquid therein can be aspirated and then dispensed onto a test element, by other apparatus of the analyzer, not shown.

Coordination of the stopper remover with the other parts of the apparatus is handled automatically by conventional means, such as a microprocessor, not shown.

## Claims

1. Stopper removing apparatus for automatically removing a stopper (10) in a open end (12) of an otherwise closed container (14), the apparatus comprising container gripping means (30, 32, 34) for gripping the container and preventing rotation thereof, stopper gripping means (40; 60) for gripping the stopper (10), and drive means (44) for rotating the stopper gripping means (40; 60) about an axis while the stopper (10) is being gripped; characterized in that the stopper gripping means (40; 60) includes engaging means (70, 72) for frictionally engaging the stopper (10) while the drive means (44) rotates in one direction, the engaging means (70, 72) disengaging the stopper (10) when the drive means (44) rotates in an opposite direction.

2. Apparatus according to claim 1, wherein the engaging means (70, 72) comprises a plurality of spikes (70) terminating in ends (72) which are disposed generally to form an annular surface which engage the stopper (10), each spike (70) being mounted so as to be non-radially aligned.

3. Apparatus according to claim 2, wherein the spikes (70) comprise wire bristles mounted on an inside surface (66) of an annular ring (64), the bristles extending in the non-radial direction.

4. Apparatus according to claim 3, wherein all of the bristles are attached to the inside surface (66) at a non-zero angle to a diameter drawn across the annular ring (64) at the position of attachment, the non-zero angle being generally the same and with the same sign for all of the bristles.

5. Apparatus according to claim 4, wherein the non-zero angle is between about 30° and 60°.

6. Apparatus according to claim 5, wherein the non-zero angle is about 45°.

7. Apparatus according to any one of claims 2 to 6, wherein the spikes (70) are substantially packed together to provide a packing density of at least about 10 spikes per cm²

8. Apparatus according to claim 7, wherein the packing density is about 15 spikes per cm².

FIG. I

FIG. 2

FIG. 3

FIG. 4